# EUROPEAN PATENT SPECIFICATION

(11) **EP 1 491 098 B1**
(45) Date of publication and mention of the grant of the patent: **16.01.2013**
(21) Application number: 03712973.1
(22) Date of filing: 26.03.2003
(51) Int. Cl.: A23L 1/238, A23L 1/22, A23L 1/23

(54) **PROCESS FOR PRODUCING BASIC SEASONING FOR MULTIPURPOSE AND UTILIZATION OF THE SAME**
VERFAHREN ZUR HERSTELLUNG EINER MEHRZWECK-BASISWÜRZE UND IHRE VERWENDUNG
PROCEDE DE PRODUCTION D'UN ASSAISONNEMENT DE BASE A USAGES MULTIPLES ET UTILISATION DUDIT ASSAISONNEMENT

(30) Priority: 04.04.2002 JP 2002103013
(43) Date of publication of application: 29.12.2004
(73) Proprietor: Shoda Shoyu Co., Ltd., Gunma 374-8510 (JP)
(72) Inventor: NINOMIYA, Daiki c/o Ajinomoto Co., Inc., Kawasaki-shi, Kanagawa 210-0801 (JP); NAGASAKI, Hiroaki c/o Ajinomoto Co., Inc., Kawasaki-shi, Kanagawa 210-0801 (JP); HIRAI, Sachi c/o Ajinomoto Co., Inc., Kawasaki-shi, Kanagawa 210-0801 (JP); SUGAWARA, Seigo c/o Ajinomoto Co., Inc., Kawasaki-shi, Kanagawa 210-0801 (JP); NAKAZATO, Kouichi c/o Ajinomoto Co., Inc., Kawasaki-shi, Kanagawa 210-0801 (JP); OKAMURA, Hideki c/o Ajinomoto Co., Inc., Kawasaki-shi, Kanagawa 210-0801 (JP); HOSOYA, Hiroshi c/o Shoda Shoyu Co., Ltd., Tatebayashi-shi, Gunma 374-8510 (JP); MOROSAWA, Hideaki c/o Shoda Shoyu Co., Ltd., Tatebayashi-shi, Gunma 374-8510 (JP); MORIYAMA, Yuhji c/o Shoda Shoyu Co., Ltd., Tatebayashi-shi, Gunma 374-8510 (JP); HIRATA, Kenji c/o Shoda Shoyu Co., Ltd., Tatebayashi-shi, Gunma 374-8510 (JP); TOMITA, Hideaki c/o Shoda Shoyu Co., Ltd., Tatebayashi-shi, Gunma 374-8510 (JP)
(74) Representative: Benedum, Ulrich Max
(86) International application number: PCT/JP2003/003697
(87) International publication number: WO 2003/084350

(56) References cited:
- JP-A- 49 134 898
- JP-A- 57 186 461
- JP-A- 58 043 758
- JP-A- 60 037 952
- US-A- 5 352 464
- KWEON-HAENG LEE ET AL.: "Survey of the manufacturing process of traditional meju for and of kanjang (Korean soy sauce)" HAN'GUG SIGPUM YEONG'YANGGWAHAG HOEJI - JOURNAL OF THE KOREAN SOCIETY OF FOOD SCIENCE AND NUTRITION, vol. 26, no. 3, 1997, pages 390-396, XP008060228 KRHAN'GUG YEONG'YANG SIGRYANG HAGHOE, PUSAN
- DATABASE WPI Section Ch, Week 197615 Derwent Publications Ltd., London, GB; Class D13, AN 1976-27147X XP002368355 -& JP 51 022891 A (MARUKIN SHOYU KK) 23 February 1976 (1976-02-23)
- SANG-DUK YI ET AL.: "Effects of raw materials and various molds on the production of koji" JOURNAL OF FOOD SCIENCE AND NUTRITION, vol. 6, no. 2, 2001, pages 101-106, XP008060226 KRKOREAN SOCIETY OF FOOD AND NUTRITION, PUSAN

## Description

### Technical Field

The present invention relates to a method for the manufacture of a novel multipurpose basic seasoning and, more particularly, it relates to a method for the manufacture of a multipurpose basic seasoning by an enzymatic decomposition of proteinic koji using soybean protein as a main material, to a seasoning which is able to be manufactured by this method, to its use, etc.

### Background Art

Soy sauce, which is a traditional brewed seasoning representing in Japan, has been consumed in large quantities from ancient days at home or as a seasoning for processing various kinds of industrial foods. In its traditional manufacturing method, soy sauce is manufactured in such a manner that soybean which is a material (raw material) is steamed, nearly the same amount of parched and cracked wheat is mixed therewith, seed koji is inoculated to manufacture koji, the resulting koji is mixed with saline water and the resulting moromi (unrefined soy sauce) is fermented and aged for a long period. In recent years, for shortening the brewing time as a main purpose, there has been developed the so-called quick brewing method for soy sauce where soy sauce koji (material for the manufacture of soy sauce) is hydrolyzed for a short period without salt or with little salt to conduct a lactic acid fermentation or an yeast fermentation followed by further aging whereupon soy sauce is manufactured (refer to JP-B-53-41238, JP-B-54-8785, JP-B-60-6182, etc.). There has been also known a method where a special enzyme such as peptidase or glutaminase is utilized during the hydrolysis (refer to JP-B-5-17827), a method where a heat-resistant enzyme is utilized (refer to JP-B-51-21054), a method where hydrolysis is carried out at high temperature for a short period (Patent No. 2,659,105 [JP-A-03-112461]), etc.

US5352464 discloses a method for manufacturing a salt-free, condensed seasoning powder comprising, among other steps, adding koji mold to proteinaceous and/or starch-rich materials to produce koji, and subjecting it to hydrolysis carried out at relatively low temperature of about 30° to about 40°C, in a period of time of about 1 to about 5 days, in the presence of alcohol.

Although soy sauce manufactured by such methods is excellent as a seasoning, as a result of diversification and preference for fine food in modern dietary habit, there has been demanded a seasoning having different functions from the prior art as a seasoning for processed foods such as a function for making the quality high enhancing, for example, the material feeling or taste of the food or a function where stable taste, flavor and color can be maintained even upon heating for long time in the case of, for example, stewing broth cooked and served at shop front or restaurant or upon heating a retort-pouch foods. Moreover, liking of consumers has a strong tendency for complex and delicate taste such as body in addition to relish or "Umami" of amino acids.

In addition, in the conventional soy sauce, although its specific brewed flavor is favored together with the taste mainly comprising the Umami, there is a problem that it masks the advantage inherent to the material in some foods. Further, in soy sauce, an aminocarbonyl reaction (aminocarbonylation) of saccharides and amino acids derived from materials or, in other words, a Maillard reaction takes place during the brewing whereby a dark brown substance which deteriorates the flavor and color is by-produced. Furthermore, the reaction products of aminocarbonylation are still produced even during the preservation of the product resulting in deterioration of the flavor and color whereby that is a problem in terms of stability of the quality and, in addition, there is a problem that smell which is not favorable to various processed foods using soy sauce is transferred or generated.

Therefore, there have been developed the various methods for the manufacture of seasoning suited for some processing foods where amino acids are main taste components. They are, for example, a method for the manufacture of a multipurpose basic seasoning which has no soy sauce-like smell and brewed flavor (smell) but is able to be widely utilized for various foods (refer to JP-A-09-121807 and JP-A-07-327631), a method for the manufacture of a seasoning by an enzymatic decomposition

(refer to JP-A-09-121807) and, as a recent one, a method for the manufacture of a flavor enhancer (refer to JP-A-2001-507223). Many of them are the methods where various protein materials are hydrolyzed using protein degrading enzyme under the condition of no or little salt to manufacture a product containing tasty amino acids and peptides and are characterized in aiming good health by low salt and in improving the liberation rate of amino acids by decomposition under the condition of no salt or little salt.

Although it is of course true that amethodof manufacturing a seasoning by an enzymatic decomposition is excellent in view of taste and productivity, there is a disadvantage of insufficiency in complex and tasty flavor as compared with a method using koji.

Under such circumstances, there has been a demand for a new type of seasoning where there is a basic taste such as Umami as a seasoning and, further, wide application to various beverages and foods is possible without brewed smell, material feeling and flavor of the beverages and foods can be enhanced andhighquality function being excellent instability to heating and stability to oxidation is available.

### Disclosure of the Invention

### 1. Problems that the Invention is to Solve

The problems which are to be solved by the invention are to develop a multipurpose seasoning in which, although soy sauce-like complex, delicate and mild taste are still retained, there is no specific brewed smell such as soy sauce flavor, changes in color upon heating, oxidation, etc. are little and broad utilization thereof to (for) various beverages and/or foods (beverage (s) / food(s)) or production thereof and to (for) other seasoning or production thereof is possible, a method for manufacturing the same, various uses thereof, etc.

### 2. Means for Solving the Problems

With regard to the above-mentioned problems, the present inventors paid their attention to the fact that the flavor specific to soy sauce is generated during fermentation and aging of unrefined soy sauce conducted in the presence of salt and that the flavor specific to soy sauce is derived from starch which is a material and is produced upon fermentation by salt-resistant yeast and lactic acid bacteria during fermentation and aging of unrefined soy sauce and they firstly manufactured the koj i by reducing the compounding ratio of starch and tried hydrolysis under a salt-free condition or, in other words, hydrolysis at high temperature for short time. As a result, it was found that, although a seasoning having a quality which is an object of the present invention was able to be manufactured in a laboratory scale, the manufacture was difficult in an industrial scale. Thus, when starch is not compounded or its compounding ratio is reduced, there was a problem that, in the common method for the manufacture of koji, various undesirable microorganisms grew during the koji-manufacturing step whereby koji was unable to be produced.

That is rather common for those skilled in the art. Thus, "tamari soy sauce" (a kind of thick soy sauce) has been known from ancient era as a soy sauce where only soybean is used as a material and, although compounding of 10 to 20% (by weight) of starch material was conducted in recent years, no koji is produced by a common koji-manufacturing method in the manufacture of tamari soy sauce and, therefore, there is adopted a method where the so-called "misodama" is prepared and a koji microorganism is grown thereon to give "misodama koji" (refer to Jozo Kyokaishi, volume 64, no. 2, pages 148 to 152, 1969).

The present inventors have carried out intensive studies for solving such problems and for developing a method for the manufacture of a multipurpose seasoning which is able to be widely utilized for various kinds of beverages and foods and, as a result, they have found that, when starch, preferably pulverized starch or, more preferably, starch of wheat or the like pulverized to an extent of 18 mesh pass or smaller or, further preferably, 30 mesh pass or so is used, it is possible to manufacture a good koji having little contamination with microbes during the koji-manufacturing step and having a high enzymatic activity by a common koji-manufacturing method even when the compounding ratio is lowered and that the resulting koji enhances the function of the resulting seasoning. It has been further found that, when seed koji is added to a material where 80% of defatted soybean and 20% of the above-mentioned pulverized wheat are mixed to conduct the manufacture of koji and then hydrolysis is carried out in the absence of salt at the temperature of 52 to 60°C for 18 to 30 hours, it is possible to give a seasoning where growth of yeast and lactic acid bacteria are suppressed, brewed smell is not noted, mild soy sauce-like taste is available, material feeling and taste inherent to beverage and/or food (beverage/food) are enhanced and stability to heating and stability to oxidation are excellent and that the seasoning is able to be widely used for various kinds of beverages and/or foods (beverage(s)/ food(s)) and has a multipurpose property. On the basis of those many findings, the present invention has now been achieved.

Thus, the present invention relates to a method for the manufacture of a multipurpose basic seasoning, characterized in that, seed koji is inoculated to a material containing 70 to 90 parts by weight of a protein material and 10 to 30 parts by weight of a starch material to manufacture koji and the resulting proteinic koji is subjected to hydrolysis in the absence of salt or in the presence of low amount of salt at the temperature range of 52 to 60°C for 18 to 30 hours. As an another embodiment, the present invention also relates to a multipurpose basic seasoning having no brewed smell (flavor) and having Umami and richness which is prepared or is able to be prepared by the above-mentioned method of the present invention. There are functions (effects) that, when it is added to an another seasoning or beverage/food (beverage and/or food) having body and mild taste, it enhances the body and the mild taste and, when it is added to a still another seasoning or beverage/food (beverage and/or food) aiming (demanding) a further material feeling (texture), it improves (activates) the flavor due to material (material feeling) of the said seasoning and beverage/food or flavor thereof.

Thus, the present multipurpose basic seasoning enhances the taste and the flavor of another seasoning or beverage/food and, to be more specific, it is able to enhance body and mild taste. Accordingly, with regard to the another seasoning and beverage/food as such, those which has body and mild taste or is demanded to activate the flavor of the material is appropriately selected.

The color tone of the multipurpose basic seasoning of the present invention is as light as that of usukuchi soy sauce (light-colored soy sauce), has excellent stability to heating and stability to oxidation, is stable against heating for long time and shows almost no change in its color tone.

### Brief Description of the Drawings

[Fig. 1]

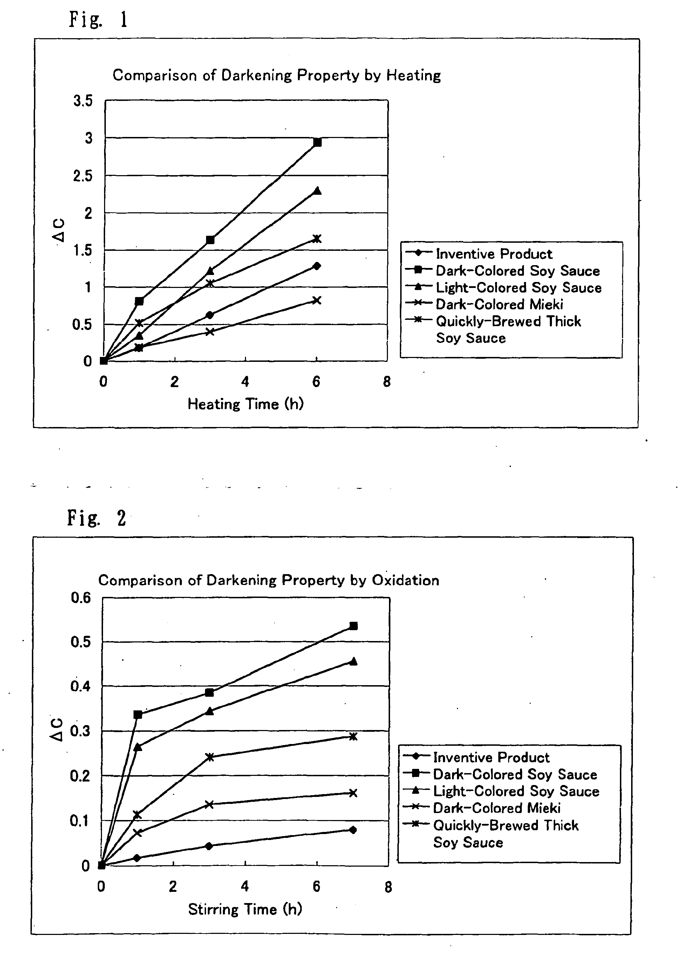

   Fig. 1 shows a property of darkening of various kinds of seasonings by heating in Example 5.
   ΔC: degree of rise in chromaticity from the start (Abs: 545 nm).
[Fig. 2]
   Fig. 2 shows a property of darkening of various kinds of seasonings by oxidation in Example 6.
   ΔC: degree of rise in chromaticity from the start (Abs: 545 nm).
[Fig. 3]

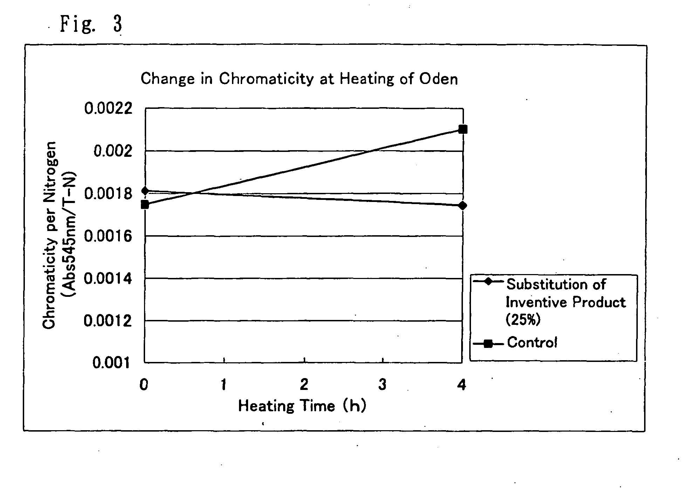

   Fig. 3 shows a property of darkening of a broth for oden (Japanese pot-au-feu) by heating using the seasoning obtained in the present invention in Example 14.
   T-N: total nitrogen

### Embodiments of the Invention

As hereunder, embodiments of the present invention will be specifically illustrated. Although the illustration will be done mainly on the manufacturing examples for the representative multipurpose basic seasoning, that is to illustrate more preferred method of the present invention and, although the present invention includes such more preferred examples, it is not limited thereto.

With regard to the protein material used in the present invention, a protein material which is commonly used for the manufacture of soy sauce may be used. For example, any protein material where koji is produced by compounding with pulverized starch material or, particularly preferably, pulverized wheat (wheat powder) may be preferably used regardless of its type. With regard to the protein material as such, it is possible preferably to use soybean, more preferably round soybean and, still more preferably, defatted soybean. Besides them, it is also possible to use plant protein such as barley, rice, corn, protein separated from rice, protein separated from potato and by-product from brewage of beer (beer leer). Animal materials such as gelatin, egg white, skim milk, milk casein, milk whey protein, fish meat, extract of boni to meat, chicken, beef, pork, extract of meat of beast and processed product thereof may also be used by mixing therewith as the so-called sub-material.

Before the preparation of koji, the protein material is preferably subjected to a denaturation treatment by heating according to a conventional method. For example, when defatted soybean is taken as an example, it is possible to use a product prepared by subjecting to a treatment at high temperature and high pressure under the condition of 1.5 to 2.0 kg/cm² after addition of water of 1.0 to 1.3-fold on a weight basis.

With regard to the starch material used in the present invention, it is possible to use wheat, wheat bran, barley, corn, etc. In using them, the starch material is used after pulverizing to such an extent that the powder contains, preferably, at least 90% of 18-mesh-pass (18 mesh pass or smaller) particles at the largest or, more preferably, at least 90% of 30-mesh-pass (30 mesh pass or smaller) particles at the largest in terms of the particle size (particle diameter) of the powder. Pulverization of the starch material maybe carried out by a grinder, a roll disintegrator, a stone mill, etc. and, after that, sieving may be conducted if necessary.

With regard to the compounding ratio of the protein material to the starchmaterial or, preferably, to the pulverized starch material, it is in terms of ratio by weight of 70 to 90 parts of the protein material and 10 to 30 parts of the starch material or, preferably, about (approximately) 80 parts : 20 parts thereof in terms of ratio by weight. When the compounding ratio of the starch material is less than 10% (10 parts), desirable product is not obtained and, as the compounding ratio lowers, manufacture of koji becomes difficult; when nothing is added, no koji is manufactured. On the other hand, when the compounding ratio thereof is more than 30% (30 parts), cereal-like smell of the product becomes strong and a desirable product can not be obtained.

With regard to the seed koji used for the manufacture of koji, it is possible to use a seed koji (*Aspergillus oryzae, Aspergillus sojae*, etc.) which is commonly used as a seed koji for soy sauce and, although commercially available seed koji for soy sauce may be used, it is preferred to select the one having sufficient protease activity, peptidase activity, glutaminase activity, etc.

With regard to a method for the manufacture of koji, it maybe carried out in accordance with a method for the manufacture of koji which has been carried out in the conventional method for the manufacture of soy sauce. Thus, for example, seed koji (*Aspergillus oryzae, Aspergillus sojae,* etc.) is inoculated to a mixture of heated protein material and pulverized starch material on an incubation bed and incubated at around 22 to 40°C for about (approximately) 40 hours to manufacture koji.

With regard to the amount of water to be added to koji when the koji (crude koji) obtained in-the manufacturing step of koji is hydrolyzed, water in an amount of preferably around 1- to 4 - fold of the weight of koji or, more preferably, around 1.5 - to 2.5-fold of the weight of koji maybe used. In conducting the hydrolysis, it is preferred to do in the absence of salt (salt-free condition) where no salt is added. It is also possible to conduct in the presence of small amount of salt such as in the presence of salt of low concentration of not more than 5% (by weight) (low-salt condition). When the salt concentration becomes higher and is more than 10%, Umami of the product becomes less and a desirable product can not be produced.

When hydrolysis of koji is carried out under a salt-free or low-salt condition, the temperature range at that time is 52 to 60°C, preferably around 55 to 60°C or, more preferably, 55 to 58°C. When the hydrolyzing temperature is higher than 60°C or, particularly, at 65°C, a seasoning having strong koji smell, bean smell and astringency is produced giving an unusual taste and, at 70°C, a seasoning having strong scorched smell and taste of color darkening is resulted giving an unusual taste. On the other hand, when the hydrolyzing temperature is lower than 52°C, a seasoning having a very acidic taste is produced giving an unusual taste. That is probably because acid producing bacteria such as lactic acid bacteria grow during the decomposition whereby the decomposed liquid becomes too acidic.

When hydrolysis of koji is carried out at the temperature range of 52 to 60°C under the salt-free or low-salt condition, time of 18 to 30 hours or, preferably, around 21 to 27 hours is adopted as the time for the hydrolysis. The hydrolyzing time is best especially when it is around 24 hours and, in the case of hydrolysis for 30 hours, some of richness in the initial to middle taste is lost giving a simple sensory feeling while, in the case of hydrolysis for 33 hours, scorched smell becomes strong giving an undesirable taste and richness in the initial to middle taste is lost. When it is 48 hours or more, lactic acid fermentation proceeds and acidic taste and bad smell resulted. On the other hand, in the case of hydrolysis of shorter than 18 hours, taste of the resulting product is light having bad taste and smell whereby a desirable product can not be obtained.

The mash where hydrolysis is completed is compressed to get a liquid part, i.e. a kiage. If necessary, the kiage is filtered to remove the insoluble sediment. In the filtration, an appropriate filtering aid may be used. For example, "Radiolite #900" (Showa Kagaku Kogyo), "Topco Pearlite #38" (Toko Perlite Kogyo), etc. may be used.

The resulting kiage filtered is subjected to a sterilization treatment and filtered through a diatomaceous earth or the like to give a clear liquid seasoning desired. With regard to the sterilization treatment, a heating treatment of, for example, at the temperature of 80 to 120°C for 1 minute to 3 hours or, preferably, at 120°C for 30 seconds may be carried out and, after the heating treatment, the product is allowed to stand at the temperature of around 60°C for one day or longer. When insoluble sediment is generated, that is removed by filtration whereupon a clear liquid seasoning may be prepared.

The seasoning prepared by way of a hydrolyzing step in the method of the present invention hereinabove is included in the multipurpose basic seasoning obtained by the present invention regardless of the shape such as liquid, powder and others, presence or absence of additional treating step(s), addition of component(s) within such a range that the object of the present invention is not inhibited, etc. For example, it is possible to add a treating step necessary for the manufacture of a seasoning to the seasoning prepared after the hydrolyzing step in the above-mentioned method whereupon the aimed (desired) seasoning is manufactured and that is wholly included in the present invention.

Further, for example, the liquid seasoning prepared as such may also be used after drying in addition to the use as liquid as a multipurpose basic seasoning of the present invention. With regard to a method for drying, methods by spray-drying, freeze-drying, etc. may be used. In the drying by means of spray-drying, a filler such as dextrin is usually used but, in the present invention, pulverization of the liquid seasoning prepared as such in the present invention is easy and, therefore, it is possible to pulverize even when no filler is used. In the present invention, a filler is not used whereby a powdery seasoning having a high tasty value can be prepared.

According to a sensory evaluation, the seasoning (multipurpose basic seasoning) prepared by the method of the present invention has no brewed smell such as a soy sauce-like smell although it has Umami and richness. To be more specific, it has a mild acidic taste in the initial taste, a sweet taste and richness in the middle taste and richness in the initial to middle taste. Here, the initial taste means the taste perceived firstly when placed in the mouth, the middle taste is the taste perceived after the initial taste (the taste under the middle part thereof) and the initial to middle taste is a taste perceived between them. Richness means that taste and flavor are not astringent but have a favorable spread.

The multipurpose basic seasoning has no brewed smell and, therefore, it can be widely used (having a multiplicity of uses) by adding to various kinds of beverages/foods and other seasonings for the purpose of enhancement of quality of the taste. Its characteristic is an effect of enhancement of body and mildness of beverage (s) /food(s) and other seasoning (s) and improvement of quali ty of the taste or, in other words, a function of enhancement of aroma, flavor and taste. For example, it is able to enhance aroma, flavor and taste when it is added to seasoning such as broth (prepared from dried fish, extract, etc.), tsuyu (such as tsuyu for noodles, etc.), dipping sauce, soup, Worcester sauce, dressing, fish and beast meat product, miso (soybean paste) and brewed bean material and also to beverage/food such as curry, hamburger, soup, miso soup, stir-fried Chinese dishes, oden and fish and beast meat product.

Then, as a characteristic of the multipurpose basic seasoning, a function of enhancement of material feeling inherent to beverage/food and other seasoning may be listed in addition to the above-mentioned function for enhancement of aroma, flavor, taste, etc. For example, when the multipurpose basic seasoning is added, for example, to broth (prepared from dried fish, extract, etc.), tsuyu (such as tsuyu for noodles, etc.) dipping sauce, and beverage/food containing the same, it is possible to enhance the feeling of the broth or flavor of the broth. Thus, when it is used for miso soup, flavor of the miso is enhanced; when it is used for stir-fried Chinese dish (such as hoikoro), flavor (feeling of miso, feeling of beans, etc.) is enhanced; when it is used for Chinese sauce, oyster sauce, etc., their flavor is enhanced; and, when it is used for oden, flavor of ingredients is enhanced. When it is used for hamburger, texture of meat substance can be enhanced and, when it is used for curry, rich taste and well-developed taste inherent to curry are able to be enhanced.

Another characteristic of the multipurpose basic seasoning of the present invention is that coloration of the seasoningper se is little and stability to heating and stability to oxidation are excellent. Therefore, darkening by heating can be prevented (improvement in stability to heating) when it is used in or compounded with seasoning or beverage/food for heat cooking, for example, such as retort processed food, broth for stewing (broth for oden, sauce for sukiyaki, etc.) and the like which is subjected to or exposed to heating for long time.

Examples of mode of use of the multipurpose basic seasoning of the present invention are a method used for the manufacture or processing of various kinds of foods, a method where it is compounded with other seasoning such as various kinds of liquid, granular or powdery seasonings and further a method where a part of other seasoning is substituted therewith (replaced by the seasoning) and used, and the like. With regard to the method where a part of other seasoning is substituted therewith and used, for example, it is possible to use all or a part of at least one of soy sauce, HP (hydrolyzed protein) and yeast extract is substituted with (replaced by) the multipurpose basic seasoning in beverage/food where at least one of the soy sauce, HP and yeast extract is used or contained. As a result, by the use of the substituted seasoning in tsuyu for noodles, seasoning for stir-fried Chinese dishes (such as hoikoro), broth for oden, etc., quality of the taste of the aimed (desired) beverage/food, noodles, stir-fried Chinese dishes (hoikoro, etc.), oden, etc. can be significantly improved.

### Preferred Embodiments

As hereunder, the present invention will be illustrated in more detail by Examples and Comparative Examples. The present invention is not limited by such Examples.

In the following Examples, defatted soybean (Esusan Koji Mame; manufactured by Aj inomoto) was used as a protein material while wheat (Koikuchi Koji Mugi ST-B; manufactured by Nisshin Flour Milling) or wheat bran (Tokusen Fusuma; manufactured by Nisshin Flour Milling) was used as a starch material and a mixture of the defatted soybean and wheat or wheat bran was heated, commercially available seed koji (Ichimurasaki Ichigokin; Bioc) was added thereto, the mixture was subjected to the koji manufacturing by a conventional method, the resulting koji was mixed with water, hydrolysis was conducted under various conditions, the hydrolyzed product was subjected to general analysis and sensory evaluation and it was judged whether the hydrolyzed product was a seasoning having the function demanded by the present invention. Further, utilization method making the best use of the characteristic of the resulting hydrolyzed product as a seasoning was also investigated. Incidentally, the term "part(s)" stands for that/those by weight.

### (Example 1)

Defatted soybean, wheat or wheat bran was used as a seasoning material and, in five experimental zones of A, B, C, D and E, compounding ratio of wheat or wheat flour to defatted soybean and hydrolyzing condition of koji were investigated.

Zone A: The defatted soybean was sprinkled with water to an extent of 89%, subjected to a heating treatment and allowed to cool for 30 minutes to prepare a material solely comprising the defatted soybean. The heating treatment of the material was carried out using an autoclave and, after 5 minutes preliminary heating, a heating treatment at 130°C for 10 minutes was carried out.

Zone B: The defatted soybean was sprinkled with water to an extent of 110%, the same heating treatment as in the case of zone A was carried out and 20 parts of pulverized wheat were mixed therewith whereupon a material comprising 80 parts of defatted soybean and 20 parts of wheat was prepared.

Zone C: The defatted soybean was sprinkled with water to an extent of 110%, the same heating treatment as in the case of zone A was carried out and 40 parts of non-pulverized ordinary wheat were mixed therewith whereupon a material comprising 60 parts of defatted soybean and 40 parts of wheat was prepared.

Zone D: The defatted soybean was sprinkled with water to an extent of 110%, 20 parts of wheat bran were mixed therewith and the same heating treatment as in the case of zone A was carried out whereupon a material comprising 80 parts of defatted soybean and 20 parts of wheat bran was prepared.

Zone E: The defatted soybean was sprinkled with water to an extent of 110%, 40 parts of wheat bran were mixed therewith and the same heating treatment as in the case of zone A was carried out whereupon a material comprising 60 parts of defatted soybean and 40 parts of wheat bran was prepared. Ratio of the materials in each of experimental zones is shown in the following table.

| Experimental Zone | Defatted Soybean | Wheat | Wheat Used | Wheat Bran | Amount of Sprinkled Water |
|---|---|---|---|---|---|
| A | 100 | 0 | | 0 | 89 |
| B | 80 | 20 | Pulverized | 0 | 110 |
| C | 60 | 40 | non-pulverized | 0 | 110 |
| D | 80 | 0 | | 20 | 110 |
| E | 60 | 0 | | 40 | 110 |

For each of the experimental zones, commercially available seed koji was added to the heated material followed by conducting manufacture of koji at 30 to 35°C for about 40 hours according to a conventional method. The resulting koji was subjected to measurements of enzymatic activity (protease, glutaminase, liquid amylase and saccharifying amylase) and standard plate count (microbe numbers). The result was that, in the test zone of zone A (defatted soybean only), microbe contamination was significant and manufacture of koji was difficult. (For the zone A, no further experiment was conducted.) Other zones except the zone A were in a good state of manufacture of koji and various enzymatic activities were also nearly the same as those for koji of common soy sauce.

For each of the experiment zones except the zone A, the resulting koji was mixed with water and 0.3 to 14.6% of salt followed by hydrolyzing at 55 to 70°C for 24 hours (one day) to 10 days. After completion of the hydrolysis, compression was conducted using a compressor (a cylindrical type of 38 cm) of a vertical press type to obtain a liquid part whereupon a crude product was prepared. The crude product was heated/sterilized at 80°C for 30 minutes and the resulting insoluble matter (heated sediment) was filtered through diatomaceous earth to prepare a seasoning (multipurpose basic seasoning).

For each of the seasonings of the experimental zones prepared by the above operation, there were carried out analysis of nitrogen (T-N) by Kjeldahl method, measurements of concentrations of amino acids (total amino acids) and glutamic acid (GH mg/dl) by an amino acid analyzer (AS 210 of Asahi Kasei), reducing sugar concentration (g/dl) by a Fehring Lehmann Schorl method which is an official analytical method, measurement of chromaticity (545 nm) by an absorbance method, measurement of pH (rancidity) and sensory evaluation test by a simple solution system by a sensory evaluation panel comprising 20 panelists.

With regard to a method for a sensory evaluation in the homogeneous evaluation system, each sample was-diluted and supplemented with salt so as to make nitrogen concentration (T-N) 0.1% and salt concentration 1.0% and a sensory evaluation was carried out at the state of room temperature. With regard to appearance and aroma, evaluation of the original liquid was carried out at the same time as well. From the above analytical data and the result of the sensory evaluation, total evaluation was done for each of the experimental zones. The result is shown in Table 1.

**[Table 1]**

| Experimental Zone | Material Composition | Concentration of Saline Solution (%) | Reaction Temperature (°C) | Reaction Time (hrs) | Sensory Evaluation | Total Evaluation |
|---|---|---|---|---|---|---|
| B-1-1 | Soybean: Wheat (80:20) | 0.3 | 55 | 24 | 9 | 10 |
| B-1-2 | | 0.3 | 55 | 48 | 6 | 5 |
| B-2 | | 0.3 | 70 | 24 | 8 | 5 |
| B-3 | | 6.3 | 45 | 24 | 3 | 2 |
| B-4 | | 13.4 | 45 | 5 days | 5 | 5 |
| C-1 | Soy bean: Wheat (60:40) | 0.3 | 55 | 24 | 5 | 5 |
| C-2 | | 0.3 | 70 | 24 | 3 | 2 |
| C-3 | | 7.1 | 45 | 24 | 5 | 5 |
| C-4 | | 14.3 | 45 | 5 days | 5 | 5 |
| D-1 | Soybean: Wheat Bran (80:20) | 0.3 | 55 | 24 | 6 | 9 |
| D-2 | | 0.3 | 70 | 24 | 3 | 2 |
| D-3 | | 6.8 | 45 | 24 | 3 | 2 |
| D-4 | | 13.5 | 45 | 5 days | 5 | 4 |
| E-1 | Soy bean: Wheat Bran (60:40) | 0.3 | 55 | 24 | 8 | 6 |
| E-2 | | 0.3 | 55 | 48 | 3 | 3 |
| E-3 | | 7.3 | 45 | 24 | 3 | 2 |
| E-4 | | 14.6 | 45 | 5 days | 8 | 6 |

In the sensory test of Table 1, points 1 to 4 mean that they are inappropriate as a seasoning, points 5 to 7 mean that they are insufficient as a seasoning and points 8 to 10 mean that they are in a satisfactory level as a seasoning. Total evaluation shows whether the quality meets the object of the present invention in view of general analytical data and result of the sensory test where point 8 or higher means the quality satisfies the object of the present invention, points 5 to 7 means quality is somewhat insufficient although there is a possibility of sufficiency and point 4 or less means the quality does not meet the object of the present invention. From the result of Table 1, good results are obtained in the experimental zones of B-1-1 and D-1. With regard to the experimental zones B-1-1 and B-1-2 where the results were best and a bit unsatisfactory, respectively, detailed analytical results are shown in Table 2. Incidentally, in the E-4 zone, the sensory evaluation was point 8 but, since it has a soy sauce-like taste, the total evaluation was as low as point 6.

**[Table 2]**

| | Evaluated Items | Zone B-1-1 | Zone B-1-2 |
|---|---|---|---|
| Analytical Data | Total Amino Acid I T-N | 3.69 | 3.73 |
| | GH/T-N | 0.57 | 0.59 |
| | Chromaticity (545 nm) | 1.07 | 1.27 |
| | Transparency | Good | qood |
| | Rancidity | Not noted | noted |
| | Nitrogen Utilizing Rate (%) | 83.7 | 85.3 |
| Sensory Evaluation | | Umami; mild acidic taste in initial taste; sweetness and richness in middle taste | cereal-like smell; Umami; strong acidic taste |
| Total Evaluation | | Point 10 | point 5 |
| Total Evaluation (Reason) | | Umami | rancidity |

| | | | |
|---|---|---|---|
| GH: glutamic acid; T-N: total nitrogen | | | |

The seasoning of point 10 obtained in the experimental zone B-1-1 has Umami which is necessary as a seasoning and, moreover, it has mild acidic taste as its initial taste and sweet taste and richness as its middle taste and has no undesirable (unusual) taste and smell and no soy sauce-like smell (flavor) whereby it has a quality which is closest the quality of the multipurpose basic seasoning which is demanded by the present invention. Incidentally, the initial taste is a taste which is firstly perceived when taken in the mouth and the middle taste is a taste which is perceived after that.

As shown in Tables 1 and 2, since no koji is prepared when only defatted soybean is used as a material, starch such as wheat or wheat bran is necessary and, with regard to the starch material, it is noted that, although wheat is preferred, wheat bran can be used as well. With regard to the compounding of starch, it was noted that, when the compounding rate was little, the taste is deep and has little cereal-like smell.

When the compounding ratio was investigated in detail, in the material comprising 90 parts of soybean and 10 parts of wheat, although the resulting koj i has somewhat ammonia smell, the sensory test result of the product decomposed at 55°C for 24 hours had mild acidic taste as an initial taste and sweet taste and richness as the middle taste together with some astringent taste. In the case of a material comprising 70 parts of soybean and 30 parts of wheat, the sensory test result of the product decomposed at 55°C for 24 hours had mild acidic taste as an initial taste and sweet taste, richness and Umami as the middle taste. It has been accordingly found that, with regard to the compounding in the material, that where 70 to 90 parts of soybean and 10 to 30 parts of wheat are mixed is preferred and that where 80 parts of soybean and 20 parts of wheat are mixed is more preferred.

Among the conditions for hydrolysis of koji, the temperature of as high as 55°C is preferred as the temperature for the hydrolysis while 70°C is too high resulting in undesirable (unusual) taste and unusual smell. There has been obtained a result that, with regard to the decomposing time, it is preferred to be around 24 hours and, when it is longer than that, acidic taste and undesirable (unusual) smell are generated. With regard to the concentration of salt, that of as low as 0.3% is preferred and, in the salt concentration of common soy sauce (10 g/dl or more), although the resulting decomposed product has Umami, it is a seasoning which is the so-called soy sauce-like one. On the basis of the above result, in Example 2 and thereafter, the temperature of 55°C, the low salt and the decomposition of 24 hours were taken as a fundamental process (flow) and investigations for manufacturing conditions and sensory evaluation in more detail were conducted.

### (Example 2)

In Example 2, with regard to wheat which is compounded with defatted soybean used as a protein material, an experiment was conducted for the property such as pulverizing condition, compounding ratio and quality of the resulting product. Wheat was pulverized by a grinder ("Hikikko K-80", a flour grinder manufactured by K. K. Kansai Toki) and pulverized products containing not less than 90% of particles smaller than those passing 9, 18, 30 and 50 mesh were prepared.

Defatted soybean (12 kg) was steamed (weight of the material after the treatment: 24.9 kg), mixed with 3 kg of the above-prepared pulverized wheat material and 9.2 g of seed koji (*Aspergillus sojae*) and manufacture of koji was carried out at 22 to 40°C for about 40 hours according to a conventional method whereupon 20 kg of koj i were prepared. Analytical result of production of koji for each samples is shown in Table 3.

**[Table 3]**

| Analytical Data and Property of Wheat | Non-Pulverized One | Powder passing through 9 mesh | Powder passing through 18 mesh | Powder passing through 30 mesh | Powder passing through 50 mesh |
|---|---|---|---|---|---|
| Water content in crude koji (wt%) | 40.1 | 41.5 | 42.7 | 37.5 | 39.4 |
| pH of crude koji | 6.7 | 7.1 | 7.3 | 6.6 | 6.6 |
| Protease activity | 2,464 | 2,609 | 3,062 | 3,733 | 3,459 |
| Glutaminase activity | 303 | 312 | 356 | 497 | 484 |
| Liquid amylase activity | 19,551 | 19,323 | 21,812 | 28,266 | 28,890 |
| Saccharifying amylase activity | 11.4 | 10.2 | 12.6 | 12.5 | 11.4 |
| Standard plate count | 1.5 × 109 | 2.0 × 10⁹ | 6.5 × 108 | 8.1 × 10⁷ | 8.3 × 10⁷ |
| Smell and appearance | ammonia smell | some ammonia smell | Good | good | good |

(In Table 3, unit for enzymatic activity is unit/g koji and general microbe numbers are numbers/g koji.)

As will be apparent from Table 3, it is noted that koji where non-pulverized material and product passing through 9 mesh show standard plate count are as high as to an extent of one order, lower protease activity and stronger ammonia smell as compared with the case of being pulverized to an extent of 18 mesh pass or smaller. When non-pulverized material and a product passing through 9 mesh are used, it is likely that wet surface of streamed defatted soybean is exposed during the manufacture of koji and that contamination with microbes is vigorous.

Then the resulting koji was mixed with 33 liters of hot water of about 72°C and hydrolyzed at the temperature of 55°C for 24 hours. After completion of the hydrolysis, 9.8 kg of salt were added thereto and dissolved therein, the mixture was compressed to separate a liquid part and 44 liters of a crude product were prepared. To this crude product was added 0.25 kg of "Radiolight #900" (manufactured by Showa Kagaku Kogyo) as a filter aid and filtration was carried out to give 44 liters of a clear product. The clear product was sterilized at 120°C for 30 seconds and the resulting insoluble matter (burned sediment) was filtered through diatomaceous earth to give 40 liters of a seasoning.

Each of the resulting seasonings was subjected to a sensory evaluation. The sensory evaluation was carried out in the same manner as in Example 1 that an direct sensory evaluation using a simple solution (homogeneous evaluation) system and a utilization (heterogeneous) evaluation system where 25% of soy sauce fraction of dipping sauce for noodles and cabbage stir-fried with soybean paste (hoikoro) was substituted were conducted. In the utilization evaluation system, soy sauce was used as a control. The result of the sensory evaluation for each sample is shown in Table 4.

**[Table 4]**

| Analysis and Evaluation / Properties of Wheat | | | Non-Pulverize d One | Powder passing through 9 mesh | Powder passing through 18 mesh | Powder passing through 30 mesh | Powder passing through 50 mesh |
|---|---|---|---|---|---|---|---|
| Analytical Result | pH | | 5.9 | 5.7 | 5.6 | 5.7 | 5.7 |
| | Nitrogen in liquid (g/dl) | | 1.59 | 1.62 | 1.65 | 1.78 | 1.76 |
| | GH (mg/dl) | | 965 | 1001 | 1060 | 1310 | 1290 |
| | GH/T-N | | 0.61 | 0.62 | 0.64 | 0.74 | 0.73 |
| | Reducing sugar (g/dl) | | 1.7 | 1.98 | 2.47 | 2.16 | 2.26 |
| | Homo-gen eous Evaluation System | Evaluation | 5 | 5 | 9 | 10 | 10 |
| Sensory Evaluation | | Comments | Unusual taste and unusual smell | Light taste | Little richness; light | Umami noted; richness in initial to middle taste | Umami noted; richness in initial to middle taste |
| | Tsuyu for Noodles | Evaluation | 3 | 3 | 9 | 10 | 10 |
| | | Comments | Unusual taste and unusual smell | Light taste | better broth feeling; somewhat light | better broth feeling; richness noted | Better broth feeling; richness noted |
| | Hoikoro | Evaluation | 3 | 3 | 9 | 10 | 9 |
| | | Comments | Unusual taste and unusual smell | Light taste; flat | feelings of miso and soybean noted; light | feelings of miso and soybean noted; mild | Feelings of miso and soybean noted; mild |

As will be noted from Table 4, the seasoning prepared by hydrolysis of non-pulverized material had undesirable (unusual) taste and undesirable (unusual) smell and were not favorable as a seasoning. Even in the case of pulverized ones, those passing through 8 mesh or larger has light taste and showed insufficient sensory result. On the contrary, the pulverized ones passing through 18 mesh or smaller, organoleptically (sensory) favorable result was obtained and the use of pulverized one passing through 30 mesh or smaller or, further the use of pulverized one passing through 50 mesh or smaller showed richness in a simple solution (homogeneous evaluation) system and, in the heterogeneous (utilization) evaluation system, they promoted feeling of broth in the case of dipping sauce for noodles and highly enhanced feelings of miso and soybean paste in the case of hoikoro as compared with the use of pulverized one passing through 18 mesh or smaller.

Therefore, from the above result, it has been noted that, in the manufacture of koji, pulverization of starch material such as wheat is preferred and, with regard to the degree of pulverization, preferred one is that containing not less than 90% by weight of powder having particle size of at least passing through 18 mesh or smaller and more preferred one is that containing not less than 90% by weight of powder having particle size of at least passing through 30 mesh or smaller.

### (Example 3)

Steamed defatted soybean (12 kg) (weight after treating the material: 24.9 kg), 3 kg of the pulverized wheat using a grinder (containing not less than 90% by weight of powder of particle size passing through 30 mesh) and 9.2 g of seed koji were mixed and manufacture of koji was carried out according to the conventional method at 22 to 40°C for about 40 hours to give 20 kg of koji.

The resulting koji was mixed with 33 liters of hot water of about 72°C and hydrolyzed at 50°C, 52°C, 55°C, 58°C, 60°C and 65°C for 24 hours. After completion of the hydrolysis, 9.8 kg of salt was added thereto and dissolved therein and the mixture was compressed to separate a liquid part whereupon 44 liters of a crude product were obtained. To this crude product was added 0.25 kg of "Radiolight #900" (manufactured by Showa Kagaku Kogyo) as a filtering aid and filtration was carried out to give 44 liters of a clear product. The clear product was sterilized at 120°C for 30 seconds and the resulting insoluble matter (burned sediment) was filtered through diatomaceous earth to give 40 liters of a seasoning.

Each of the resulting seasonings was subjected to analytical test and sensory evaluation by the same method as in Example 2. The result is shown in Table 5.

**[Table 5]**

| Temp (°C) | Analysis | | Sensory Evaluation | | | | | |
|---|---|---|---|---|---|---|---|---|
| | Reducing Sugar (g/dl) | Lactic Acid (mg/dl) | Homogeneous Evaluation System | | Tsuyu for Noodles | | Hoikoro | |
| | | | Evaluation | Comments | Evaluation | Comments | Evaluation | Comments |
| 50 | 1.11 | 1252 | 2 | Rancidity smell | 2 | Undesirable taste, undesirable smell, sour | 2 | Undesirable taste, undesirable smell |
| 52 | 1.03 | 75 | 9 | Umami noted; rich taste in initial to middle taste; a bit plain | 9 | better broth feeling | 9 | Mild; enhanced miso and bean feelings; somewhat refreshing |
| 55 | 1.72 | 40 | 10 | Umami noted; rich taste in initial to middle taste | 10 | better broth feeling | 10 | Mild; enhanced miso and bean feelings |
| 58 | 2.03 | 0 | 10 | Umami noted; rich taste in initial to middle taste; light flavor | 10 | better broth feeling | 10 | Mild; enhanced miso and bean feelings |
| 60 | 1.88 | 28 | 8 | Some scorched smell; weak richness; light flavor | 8 | better broth feeling | 8 | Some scorched smell; little mildness |
| 65 | 1.88 | 28 | 3 | bean smell, koji smell, astringent taste, undesirable taste, undesirable | 3 | strong bean smell | 3 | Scorched smell; refreshing |

From the result of Table 5, it has been noted that, at the decomposing temperatures of 52°C, 55°C, 58°C and 60°C in the case of a simple solution system, the product is a seasoning of a type which has not been available yet having no brewed smell specific to soy sauce and having richness in the initial tomiddletaste. In the heterogeneous (utilization) evaluation system, it has been also noted to have a function of activating the taste of other materials such as that feeling of broth is promoted in the case of tsuyu for noodle and that feelings of miso and bean paste are enhanced in hoikoro. When the decomposing temperature was 65°C, a seasoning having strong koji smell, bean smell and astringent taste was resulted and undesirable (unusual) taste was noted. When the decomposing temperature was 50°C and lower, a seasoning having a very acidic taste was produced and undesirable (unusual) taste was noted. That is probably because, during the decomposition, acid-producing microbes such as lactic acid bacteria grew whereby the decomposition solution turned sour. From the above-mentioned result, it has been found that, as a decomposing temperature, 52 to 60°C is preferred and around 55 to 58°C is more preferred.

### (Example 4)

Koji was manufactured by the same method as in Example 3 and the resulting koji was hydrolyzed at the temperature of 55°C where the time for the hydrolysis was varied (within a range of 16 to 33 hours). After the hydrolysis, a seasoning was manufactured according to the method of Example 3 and analysis and sensory evaluation were carried out. The result is shown in Table 6.

**[Table 6]**

| Time (hrs) | Analysis | Sensory Evaluation | | | | | |
|---|---|---|---|---|---|---|---|
| | Reducing Sugar (g/dl) | Homogeneous Evaluation System | | Tsuyu for Noodle | | Hoikoro | |
| | | Evaluation | Comments | Evaluation | Comments | Evaluation | Comments |
| 16 | 1.79 | 3 | Light taste | 4 | Light taste | 3 | Undesirable taste; undesirable smell |
| 18 | 1.80 | 8 | Although a bit weak taster, initial to middle taste is rich | 8 | Enhanced broth feeling; a bit weak richness | 8 | Enhanced feelings of miso and beans; a bit light taste |
| 21 | 1.88 | 10 | Umami noted; rich in initial to middle taste | 10 | Enhanced broth feeling; richness noted | 10 | Mild; enhanced feelings of miso and beans |
| 24 | 2.05 | 10 | Umami noted; rich in initial to middle taste | 10 | Enhanced broth feeling; richness noted | 10 | Mild; enhanced feelings of miso and beans |
| 27 | 2.03 | 10 | Umami noted; rich in initial to middle taste | 10 | Enhanced broth feeling; richness noted | 9 | Mild; enhanced feelings of miso and beans |
| 30 | 2.11 | 8 | Umami noted; little rich in initial to middle taste; some scorched smell | 8 | Enhanced broth feeling; a bit little richness | 8 | Smelling; refreshing |
| 33 | 2.19 | 4 | Scorched smell; undesirable taste and undesirable smell; refreshing flavor | 4 | Undesirable taste and undesirable smell | 4 | Strong scorched smell; refreshing |

As will be noted from Table 6, when the time is shorter than 18 hours, taste of the resulting product is light (thin) and undesirable (unusual) taste and smell are noted whereby a desirable product is not prepared. On the contrary, it has been found that, when decomposition was 18 hours, 21 hours, 24 hours, 27 hours or 30 hours, the product is a seasoning of a new type which has not been available as same as the result in Example 1 that, in a homogeneous evaluation (simple solution) system, there is no brewed smell (flavor) specific to soy sauce and there is richness in the initial to middle taste. In the utilization (heterogeneous) evaluation system, it has been noted to have a function of activating the taste of other materials such as that feeling of broth is promoted in the case of tsuyu for noodle and that feelings of miso and bean paste are enhanced in hoikoro. It has been found that, in the case of decomposition for 30 hours, richness in the initial to middle taste disappears giving a refreshing sensory feeling. When the time for hydrolysis is longer than 30 hours, undesired taste is generated and, in the case of decomposition for 33 hours, scorched smell becomes strong, undesirable (unusual) taste is perceived and richness in the initial tomiddle taste disappears. From the above-mentioned result, it has been found that the decomposing time in the decomposition at 55°C is preferably about 18 to 30 hours and more preferably about 21 to 27 hours.

### (Example 5) Stability to heating

Koji (20kg) was prepared by the method mentioned in Example 3, mixed with 33 liters of hot water and hydrolyzed at 55°C for 24 hours. After completion of the hydrolysis, a treatment was carried out according to the method mentioned in Example 3 to give a seasoning. Stability of the resulting seasoning to heating was tested. The resulting seasoning was adjusted to an extent of 1.0 g/dl of total nitrogen and pH 5.7 and 1.5 ml thereof were dispensed in a plastic tube (Eppendorf) and heated at 100°C for 6 hours. During the heating, the sample was sampled from time to time and measurement of chromaticity (Abs: 545 nm) was conducted. As controls, dark-colored soy sauce (Kikkoman), light-colored soy sauce (Kikkoman), dark-colored "Mieki" (manufactured by Ajinomoto) and quickly-brewed thick soy sauce (Ajinomoto; refer to JP-A-7-327631) were used and darkening of each of the samples upon heating was compared. The result is shown in Fig. 1. In Fig. 1, ΔC shows degree of rise in chromaticity from the start (Abs: 545 nm).

As will be noted from Fig. 1, in the seasoning obtained by the present invention, rise in chromaticity by heating is little as compared with seasonings prepared by hydrolysis of protein such as soy sauce. Thus, it is shown to have a high stability to heating. That shows a stable color tone is maintained even when it is used for foods which are heated or exposed to heating for long time such as retort pouch food and stewing liquid.

### (Example 6) Stability to oxidation

Each of the seasoning prepared by the method mentioned in Example 5, dark-colored soy sauce (Kikkoman), light-colored soy sauce (Kikkoman), dark-colored "Mieki" (manufactured by Ajinomoto) and quickly-brewed thick soy sauce (Aj inomoto; refer to JP-A-7-327631) was adjusted to an extent of 1.0 g/dl total nitrogen and pH 5.7 and 100 ml thereof were placed in a 500-ml Sakaguchi's flask and shaken at 30°C for seven days at 120 rpm. During the shaking, the sample was sampled from time to time to measure the chromaticity (Abs: 545 nm) and darkening property of each sample by oxidation was compared. The result is shown in Fig. 2.

As will be noted from Fig. 2, in the seasoning (multipurpose basic seasoning) prepared by the present invention, rise in chromaticity by oxidation is little as compared with seasonings prepared by hydrolysis of protein such as soy sauce. Thus, it is shown to have a high stability to oxidation. That shows a stable color tone is maintained even when the seasoning per se prepared by the present invention and processed food using the present seasoning are preserved for a long period in the presence of oxygen and that the seasoning prepared by the present invention has a very useful function in keeping the shelf life of the processed food long.

### (Example 7) Effect of addition to consommé

Powdery consommé (35% of salt, 18% of sodium L-glutamate (MSG), 0.2% of IN, 0.3% of white pepper powder, 0.5% of black pepper powder, 8.0% of beef extract powder, 3.0% of white wine powder, 2.0% of celery powder, 8.0% of Chinese cabbage extract powder, 2.5% of onion extract powder and 25.5% of lactose) was dissolved (5 g/dl) to prepare consommé. To this consommé was added the seasoning prepared in Example 5 so as to make the concentration 0.6% (w/v) and, using the non-addition zone as a control, quality comparison was carried out by a paired preference (two-point palate) test by sensory (palate) panelists (N = 20). The result is shown in Table 7.

**[Table 7]**

| Samples | Body | Middle taste | Mildness | Preference for quality of taste |
|---|---|---|---|---|
| Control Zone | 4 | 4 | 5 | 4 |
| Added Zone | 16 | 16 | 15 | 16 |

As will be noted from Table 7, the consommé to which the seasoning of the present invention was added showed enhanced body, mildness, etc. and was preferred in terms of quality of the taste.

### (Example 8) Effect of addition to miso soup

A commercially available instant miso soup ("Asage"; manufactured by Nagatanien K. K.) was diluted to a commonly used concentration and the seasoning prepared in Example 5 was added thereto so as to make its concentration in the soup 0.6% (w/v). When this was evaluated by professional palate panelists, it has been confirmed that, as a result of addition of the present seasoning, flavor of miso is improved, body is enhanced and thick feeling is given. A miso soup to which the present seasoning was added was subjected to quality comparison under the same condition by a paired preference (two-point palate) test by sensory panelists (N = 20) using non-addition zone as a control. The result is shown in Table 8. From Table 8, it is noted that all of the above-mentioned effects by addition are significantly improved.

**[Table 8]**

| Samples | Body | Mildness | Flavor of miso | Preference for quality of taste |
|---|---|---|---|---|
| Control Zone | 2 | 3 | 5 | 5 |
| Added Zone | 18 | 17 | 15 | 15 |

### (Example 9) Effect by addition to dressing

To commercially available dressing (manufactured by Ajinomoto) was added the seasoning prepared in Example 5 so as to make its concentration 0.6% (w/v) in the liquid. This was evaluated by professional palate panelists whereupon it was confirmed that, as a result of addition of the present seasoning, strong sourness and strong saltiness were masked and that body and mildness were enhanced. A dressing to which the present seasoning was added was subjected to quality comparison under the same condition by a paired preference (two-point palate) test by sensory panelists (N = 20) using non-addition zone as a control. The result is shown in Table 9. From Table 9, it is noted that all of the above-mentioned effects by addition are significantly improved.

**[Table 9]**

| Samples | Body | Mildness | Potency of Strong Sourness and Strong Saltiness | Preference for quality of taste |
|---|---|---|---|---|
| Control Zone | 5 | 6 | 18 | 5 |
| Added Zone | 15 | 14 | 2 | 15 |

### (Example 10) Effect by addition to curry

To commercially available retort curry (Bon Curry Gold; Otsuka Pharmaceutical) was added the seasoning prepared in Example 5 so as to make its concentration 0.6% (w/w) in the liquid. This was evaluated by professional palate panelists whereupon it was confirmed that, as a result of addition of the present seasoning, matured flavor was improved, body was enhanced and thick feeling (thickness) was given. A curry to which the present seasoning was added was subjected to quality comparison by a paired preference (two-point palate) test under the same condition by sensory panelists (N = 20) using non-addition zone as a control. The result is shown in Table 10. From Table 10, it is noted that all of the above-mentioned effects by addition are significantly improved.

**[Table 10]**

| Samples | Potency of body | Potency of thickness | Potency of matured feeling | Preference for quality of taste |
|---|---|---|---|---|
| Control Zone | 6 | 5 | 3 | 5 |
| Added Zone | 14 | 15 | 17 | 15 |

### (Example 11) Effect by addition to hamburger

To home-made hamburger was added the seasoning prepared in Example 5 so as to make its concentration 0.6% (w/w) in the liquid. This was evaluated by professional sensory panelists whereupon it was confirmed that, as a result of addition of the present seasoning, natural meat quality was improved and sweet taste and body such as richness were enhanced. A hamburger to which the present seasoning was added was subj ected to quality comparison under the same condition by a paired preference (two-point palate) test by sensory panelists (N = 20) using non-addition zone as a control. The result is shown in Table 11. From Table 11, it is noted that all of the above-mentioned effects by addition are significantly improved.

**[Table 11]**

| Samples | Potency of body | Potency of meat substance feeling | Preference for quality of taste |
|---|---|---|---|
| Control Zone | 5 | 5 | 3 |
| Added Zone | 15 | 15 | 17 |

### (Example 12) Evaluation for substitution of soy sauce in tsuyu for noodles

In a compounding for tsuyu for noodles mainly comprising soy sauce (dark-colored one; dark-colored thick one called "Tamari"), dried bonito (Aramotobushi; Karebushi), sugar, mirin (sweet sake), salt, sodium L-glutamate (MSG) and lactic acid, 50% of the soy sauce section were substituted with the seasoning mentioned in Example 5 to prepare a tsuyu for noodles. The tsuyu for noodles prepared as such by substituting with the present seasoning was evaluated by professional sensory panelists and it was confirmed that, as a result of substitution with the present seasoning, flavor of sauce and smoked smell were improved and mildness was enhanced. The tsuyu substituted with the present seasoning was subjected to quality comparison under the same condition by a paired preference (two-point palate) test by sensory panelists (N = 20) using non-addition zone as a control. The result is shown in Table 12. From Table 12, it is noted that all of the above-mentioned effects by addition are significantly improved.

**[Table 12]**

| Samples | Potency of sauce flavor and smoked smell | Potency of meat substance feeling | Preference for quality of taste |
|---|---|---|---|
| Control Zone | 5 | 3 | 3 |
| Substituted Zone | 15 | 17 | 17 |

### (Example 13) Evaluation for substitution in meat and cabbage stir-fried dish with miso (hoikoro)

In a compounding for a seasoning for stir-frying of hoikoro mainly comprising miso, beans, soy sauce, sugar, sodium L-glutamate (MSG), sake, ginger and garlic, 25% of the soy sauce section were substituted with the seasoning mentioned in Example 5 to prepare a seasoning. The hoikoro prepared as such by substituting with the present seasoning was evaluated by professional sensory panelists and it was confirmed that, as a result of substitution with the present seasoning, flavors of miso and bean paste were improved, body was enhanced and thick feeling was given. The hoikoro substituted with the present seasoning was subjected to quality comparison under the same condition by a paired preference test by sensory panelists (N = 20) using non-addition zone as a control. The result is shown in Table 13. From Table 13, it is noted that all of the above-mentioned effects by addition are significantly improved.

**[Table 13]**

| Samples | Potency of flavors of miso and bean | Potency of body | Preference for quality of taste |
|---|---|---|---|
| Control Zone | 1 | 2 | 1 |
| Substituted Zone | 19 | 18 | 19 |

### (Example 14) Evaluation for substitution in sauce for oden

In a compounding for a seasoning for odenmainly comprising soy sauce, bonito extract, sea tangle extract, mono sodium L-glutamate (MSG), salt, sugar and sake, 25% of the soy sauce section were substituted with the seasoning mentioned in Example 5 to prepare a seasoning. The soup for oden substituted with the seasoning obtained in Example 5 was evaluated by professional sensory panelists and it was confirmed that, as a result of substitution with the present seasoning, flavor of broth was improved and body and mildness were enhanced. The soup for oden substituted with the present seasoning was subjected to quality comparison under the same condition by a paired preference test by sensory panelists (N = 20) using non-addition zone as a control. The result is shown in Table 14.

**[Table 14]**

| Samples | Potency of body | Potency of mildness | Preference for quality of taste |
|---|---|---|---|
| Control Zone | 5 | 6 | 5 |
| Added Zone | 15 | 14 | 15 |

As will be apparent from Table 14, it is noted that all of the above-mentioned effects by addition are significantly improved

Further, with regard to the soup for oden substituted with the present seasoning, color increase by heating was measured from time to time (Abs: 545 nm) for comparing the darkening property with the non-substituted zone as a control. The result is shown in Fig. 3. As shown in Fig. 3, the product using the present seasoning had less increase in chromaticity as compared with the non-addition zone. It was also confirmed by a sensory test by means of quality comparison according to a paired preference test using sensory panelists (N = 20) that, as compared with the non-addition zone, scorched smell, musty smell and bitter taste were little.

### (Example 15)

The seasoning prepared in Example 5 was dried (pulverized) using a spray drier to give a powdery seasoning. At that time, investigation on drying was conducted for a product where dextrin was added in an amount of 50% as a filler and another product where no filler was added and it was possible to be efficiently dried regardless of presence or absence of the filler. Until now, in drying of soy sauce, it has been necessary to add a filler such as dextrin to an extent of about 50% whereby potency of the taste lowers while, in the case of the seasoning according to the present invention, drying is carried out without addition of a filler whereby it is now possible to give a soy sauce-like powdery seasoning having a high taste potency.

As will be understood from the above result, the seasoning prepared by the method of the present invention is a seasoning having no brewed smell (flavor) specific to soy sauce, having relish or Umami, and rich in the initial to middle taste and being excellent in stability to heat (heating) and stability to oxidation in view of color tone. The seasoning as such has a function to emphasize the material feelings of miso, bean paste, etc. as well as broth contained in beverage and food and to enhance body taste and mildness and, therefore, it is able to be widely used in various seasonings such as tsuyu for noodles, and in various processed foods such as Chinese stir-fried dishes (such as hoikoro).

### Advantages of the Invention

According to the present invention, there is provided a multipurpose basic seasoning having no brewed smell specific to soy sauce, having Umami and richness, especially having richness in the initial to middle taste and being excellent in stability to heat (heating) and stability to oxidation. By the use of such a seasoning, there are further provided beverage/food and seasoning where body taste and mildness are enhanced or material feeling is emphasized and, particularly, various seasonings such as broth and tsuyu for noodles and various processed foods such as Chinese stir-fried dishes (hoikoro).

Consequently, the present invention is quite useful in industry, particularly in the field of foods.

## Claims

1. A method for the manufacture of a multipurpose basic seasoning, **characterized in that** seed koji is inoculated to a material containing 70 to 90 parts by weight of a protein material and 10 to 30 parts by weight of a starch material to manufacture koji and the resulting proteinic koji is subjected to hydrolysis in the absence of salt or in the presence of no more than 5% by weight of salt, at the temperature range of 52 to 60°C for 18 to 30 hours.

2. A method according to claim 1, wherein the protein material is defatted soybean and the starch material is pulverized wheat.

3. A method according to claim 2, wherein the pulverized wheat contains at least 90 wt.% of powder having a particle size of passing through 18 mesh at the largest.

4. A method according to claim 2 or 3, wherein the pulverized wheat contains at least 90 wt.% of powder having a particle size of passing through 30 mesh at the largest.

5. A seasoning or beverage/food where body taste and mildness are enhanced and/or flavor of the material is emphasized, containing a multipurpose basic seasoning manufactured according to the method of any of claims 1 to 4.

6. A method of emphasizing the flavor of seasoning or beverage/food material, comprising compounding a multipurpose basic seasoning manufactured according to the method of any of claims 1 to 4 with any of seasoning selected from broth, tsuyu, dipping sauce, Worcester sauce, dressing, miso and brewed product made from bean material or is compounded with any of beverage/food selected from curry, hamburger, soup, miso soup, Chinese stir fried product and oden; where compounding with the seasoning and beverage/food may be carried out during the manufacturing stage thereof.

7. A seasoning or beverage/food according to claim 5, wherein the seasoning is broth, tsuyu, dipping sauce, Worcester sauce, dressing, miso or brewed product made from bean material and the beverage/food is curry, hamburger, soup, miso soup, Chinese stir-fried dish, oden or fish and beast meat product .

8. A beverage/food according to claim 5, containing at least one of soy sauce, hydrolyzed protein and yeast extract, **characterized in that** all or a part of at least one of the soy sauce, hydrolyzed protein and yeast extract is replaced by the multipurpose basic seasoning.

9. A method for improving a darkening property by heating, comprising compounding a multipurpose basic seasoning manufactured according to the method of any of claims 1 to 4 with a seasoning or a beverage/food which is for heat cooking.

## Patentansprüche

1. Herstellungsverfahren für eine Mehrzweck-Basiswürze, **dadurch gekennzeichnet, dass** Keim-Koji in ein Material, enthaltend 70 bis 90 Gewichtsanteile Eiweißmaterial und 10 bis 30 Gewichtsanteile Stärkematerial eingeimpft wird, um Koji herzustellen, und dass der hergestellte proteinische Koji einer Hydrolyse in Abwesenheit von Salz oder in der Anwesenheit von nicht mehr als 5 Gew.-% Salz unterworfen wird, in einem Temperaturbereich von 52 bis 60°C während 18 bis 30 Stunden.

2. Verfahren gemäß Anspruch 1, wobei das Eiweißmaterial entfettete Sojabohne ist und das Stärkematerial zerstäubter Weizen.

3. Verfahren gemäß Anspruch 2, wobei der zerstäubte Weizen mindestens 90 Gew.-% Pulver enthält mit einer Korngröße, die höchstens durch eine Mesh 18 passt.

4. Verfahren gemäß Anspruch 2 oder 3, wobei der zerstäubte Weizen mindestens 90 Gew.-% Pulver enthält mit einer Korngröße, die höchstens durch eine Mesh 30 passt.

5. Würze oder Getränk/Nahrungsmittel, wobei Körpergeschmack und -milde verstärkt werden und/oder Geschmack des Materials verstärkt ist, enthaltend eine Mehrzweck-Basiswürze, hergestellt nach dem Verfahren aus irgendeinem der Ansprüche 1 bis 4.

6. Verfahren zur Verstärkung des Geschmacks einer Würze oder eines Getränke-/Nahrungsmittelmaterials, umfassend Zusammensetzen einer Mehrzweck-Basiswürze, hergestellt nach dem Verfahren aus irgendeinem der Ansprüche 1 bis 4 mit irgendeiner Würze, ausgewählt aus Brühe, Tsuyu, Dip, Worcester Sauce, Dressing, Miso und aus Bohnenmaterial gebraute Produkte, oder welche zusammengesetzt ist mit irgendeinem Getränk/Nahrungsmittel, ausgewählt aus Curry, Hamburger, Suppe, Misosuppe, chinesisches Stirfry-Gericht und Oden; wobei Zusammensetzen mit der Würze und dem Getränk/Nahrungsmittel während dessen Herstellungsschritt erfolgen kann.

7. Würze oder Getränk/Nahrungsmittel gemäß Anspruch 5, wobei die Würze Brühe, Tsuyu, Dip, Worcester Sauce, Dressing, Miso und aus Bohnenmaterial gebrautes Produkt ist und das Getränk/Nahrungsmittel Curry, Hamburger, Suppe, Misosuppe, chinesisches Stirfry-Gericht, Oden oder ein Fisch- und Fleischprodukt.

8. Würze oder Getränk/Nahrungsmittel gemäß Anspruch 5, enthaltend mindestens eines aus Sojasauce, hydrolysiertes Eiweiß und Hefeextrakt, **dadurch gekennzeichnet, dass** alle oder ein Teil von mindestens einem aus der Sojasauce, dem hydrolysiertem Eiweiß und dem Hefeextrakt durch die Mehrzweck-Basiswürze ersetzt wird.

9. Verfahren zum Verbessern einer Verdunkelungseigenschaft durch Erhitzen, umfassend Zusammensetzen einer Mehrzweck-Basiswürze, hergestellt mit dem Verfahren aus irgendeinem der Ansprüche 1 bis 4 mit einer Würze oder einem Getränk/Nahrungsmittel für das Hitzekochen.

## Revendications

1. Un procédé de fabrication d'un assaisonnement de base à usages multiples **caractérisé en ce qu'**un koji de germes est inoculé à une substance contenant 70 à 90 parties en poids d'une substance protéinique et 10 à 30 parties en poids d'une substance amylacée de façon à fabriquer du koji et le koji protéinique résultant est soumis à une hydrolyse en l'absence de sel ou en présence d'au maximum 5% en poids de sel à une plage de température de 52 à 60°C pendant 18 à 30 heures.

2. Un procédé selon la revendication 1, où la substance protéinique est du soja dégraissé et la substance amylacée est du blé pulvérisé.

3. Un procédé selon la revendication 2, où le blé pulvérisé contient au moins 90 % en poids de poudre possédant une taille de particule pouvant passer au travers d'un maillage de 18 au maximum.

4. Un procédé selon la revendication 2 ou 3, où le blé pulvérisé contient au moins 90 % en poids de poudre possédant une taille de particule pouvant passer au travers d'un maillage de 30 au maximum.

5. Un assaisonnement ou un aliment/boisson dont la saveur et la douceur sont rehaussées et/ou l'arôme de la substance est rehaussé contenant un assaisonnement de base à usages multiples fabriqué selon le procédé de l'une quelconque des revendications 1 à 4.

6. Un procédé de rehaussement de l'arôme d'un assaisonnement ou d'une substance alimentaire/boisson comprenant le mélange d'un assaisonnement de base à usages multiples fabriqué selon le procédé de l'une quelconque des revendications 1 à 4 avec l'un quelconque des assaisonnements sélectionnés parmi bouillon, tsuyu, sauce de trempage, sauce Worcester, sauce pour salade, miso et produit brassé fabriqué à partir d'une substance à base de fève ou mélangé avec un aliment/boisson quelconque sélectionné parmi curry, hamburger, soupe, soupe de miso, produit frit ou sauté à la chinoise et oden, où le mélange avec l'assaisonnement et l'aliment/boisson peut être réalisé au cours de l'étape de fabrication de ceux-ci.

7. Un assaisonnement ou un aliment/boisson selon la revendication 5, où l'assaisonnement est bouillon, tsuyu, sauce de trempage, sauce Worcester, sauce pour salade, miso ou produit brassé fabriqué à partir d'une substance à base de fève et l'aliment/boisson est curry, hamburger, soupe, soupe de miso, plat frit ou sauté à la chinoise, oden ou produit carné de bétail ou de poisson.

8. Un aliment/boisson selon la revendication 5, contenant au moins un produit parmi sauce de soja, protéine hydrolysée et extrait d'amidon, **caractérisé en ce que** tout ou partie d'au moins un produit parmi sauce de soja, protéine hydrolysée et extrait d'amidon est remplacé par l'assaisonnement de base à usages multiples.

9. Un procédé d'amélioration d'une propriété d'opacification par chauffage comprenant le mélange d'un assaisonnement de base à usages multiples fabriqué selon le procédé de l'une quelconque des revendications 1 à 4 avec un assaisonnement ou un aliment/boisson qui est destiné à la cuisson.
